# EUROPEAN PATENT SPECIFICATION

(11) **EP 1 247 724 B1**
(45) Date of publication and mention of the grant of the patent: **30.11.2005**
(21) Application number: 01000532.0
(22) Date of filing: 11.10.2001
(51) Int. Cl.: B62D 25/04, B60N 2/42

(54) **Vehicle body structure with a curved side pillar**
Fahrzeugaufbau mit einer gebogenen Säule
Structure de carosserie de véhicule comportant un montant latéral incurvé

(30) Priority: 17.10.2000 US 690277
(43) Date of publication of application: 09.10.2002
(73) Proprietor: Ford Global Technologies, LLC, Dearborn, MI 48126 (US)
(72) Inventor: Mendis, Kolita, Newbury Park, CA 91320 (US); Frasher, Douglas H., Newbury Park, CA. 91320 (US); Loczi, Geza, Moopark, CA 93021 (US); Jonsell, Kristina, T.O., CA 91360 (US)
(74) Representative: Messulam, Alec Moses

(56) References cited:
- EP-A- 0 423 348
- FR-A- 2 642 032
- GB-A- 2 311 259
- US-A- 5 398 989

## Description

The present invention relates motor vehicles or automobiles and, more particularly, to a side or B-pillar for a vehicle that is constructed to improve side vision for both a driver and rear passengers and also to improve the vehicle side impact load resistance.

It is well know to provide a side or B-pillar structure typically positioned between the front and rear doors of a passenger vehicle. Such pillars are known to obstruct at least a portion of the side vision of the driver, often referred to as a blind spot. Such an obstruction is inconvenient for the driver as they need to look around the obstruction or blind spot to obtain clear side vision.

However, the obstruction caused by conventional designs is outweighed by the safety benefits, in the form of the side impact load resistance provided by current B-pillar designs.

It is an object of the invention to provide an improved side pillar structure that at least partially eliminates the side vision obstruction that can occur with conventional designs without compromising safety.

It is another object of the present invention to provide a B-pillar design that enhances the side impact load resistance of the vehicle.

According to a first aspect of the invention there is provided a motor vehicle having a body structure defining a passenger compartment, the body structure including at least one side pillar having a lower portion secured to a bottom portion of the vehicle and an upper portion secured to a top portion of the vehicle, (see US-A-5398989) characterised in that there is a middle portion that extends inwardly with respect to the passenger compartment so that the upper portion is disposed further inward than said lower portion, so that a void between the side pillar and the upper glass part of the vehicle door is created to increase the side visibility of the driver.

The upper portion may extend generally vertically from said middle portion to its juncture with the top portion of the vehicle.

The middle portion may be a curved middle portion that spans and extends generally inwardly in the region of a beltline of the vehicle.

The lower portion may be secured to a side member.

The upper portion may be secured to a cant rail.

The vehicle may further comprise at least one seat having bottom and back portions and including a seat back support structure extension that extends toward said B-pillar to minimize impingement into the passenger compartment in the event of a side impact.

The seat back support structure may extend outwardly towards, but does not contact the side pillar, so that the seat back support structure overlaps the side pillar regardless of seat adjustment so as to remain an effective independent load path.

Alternatively, the vehicle may further comprise at least one seat having bottom and back portions wherein a support arm is connected between a side pillar and an adjacent seat back.

The support arm may have a first end rotatably coupled to the side pillar and a second end rotatably coupled to the seat back.

The first end of said support member may be coupled to the upper or middle portions of the B-pillar.

Preferably, the second end may be rotatably coupled to a seat back support structure disposed in said vehicle seat back.

The structure disposed in said seat back may connect the seat back to a seat bottom in which case the structure may include a pair of leg portions each of which is connected to a sliding mechanism connecting the seat to the motor vehicle.

Each of said respective sliding mechanisms may include a respective joint that allows for compensation in length between said support arm and said sliding mechanisms.

Each of the sliding mechanisms may have an energy absorber associated therewith in order to minimize movement of the respective sliding mechanism.

At least a portion of the side pillar may be covered by a flange portion of the seat back.

The invention will now be described by way of example with reference to the accompanying drawing of which:-
FIG. 1 is a side view of a vehicle driver compartment, including a B-pillar and seat, in accordance with a first aspect of the present invention;
FIG. 2 is a rear view of the B-pillar and seat shown in FIG 1;
FIG. 3 is a perspective view of a vehicle driver compartment shown in FIG. 1 but showing a first embodiment of a connection between the B-pillar structure and a seat back structure in accordance with a second aspect of the invention;
FIG. 4 is rear view of the B-pillar and seat shown in FIG. 3;
FIG. 5 is an enlarged view of a second embodiment of a connection between the B-pillar structure and the seat back structure;
FIGURE 6 is a perspective view of a vehicle driver compartment, showing a third embodiment of a connection between a B-pillar structure and a seat back structure;
FIGURE 7 is a rear view of the vehicle driver compartment shown in FIG. 6;
FIGURE 8 is a front view of the vehicle driver compartment shown in FIG. 6;
FIGURE 9 is a rear view of a vehicle driver compartment, showing a third embodiment of a B-pillar and a seat back extension for resisting slide impact intrusion;
FIGURE 10 is a rear view of a vehicle driver compartment showing a seat back and B-pillar formed as an integral structure in accordance with the present invention; and
FIGURE 11 is a rear view of a vehicle driver compartment during a rollover.

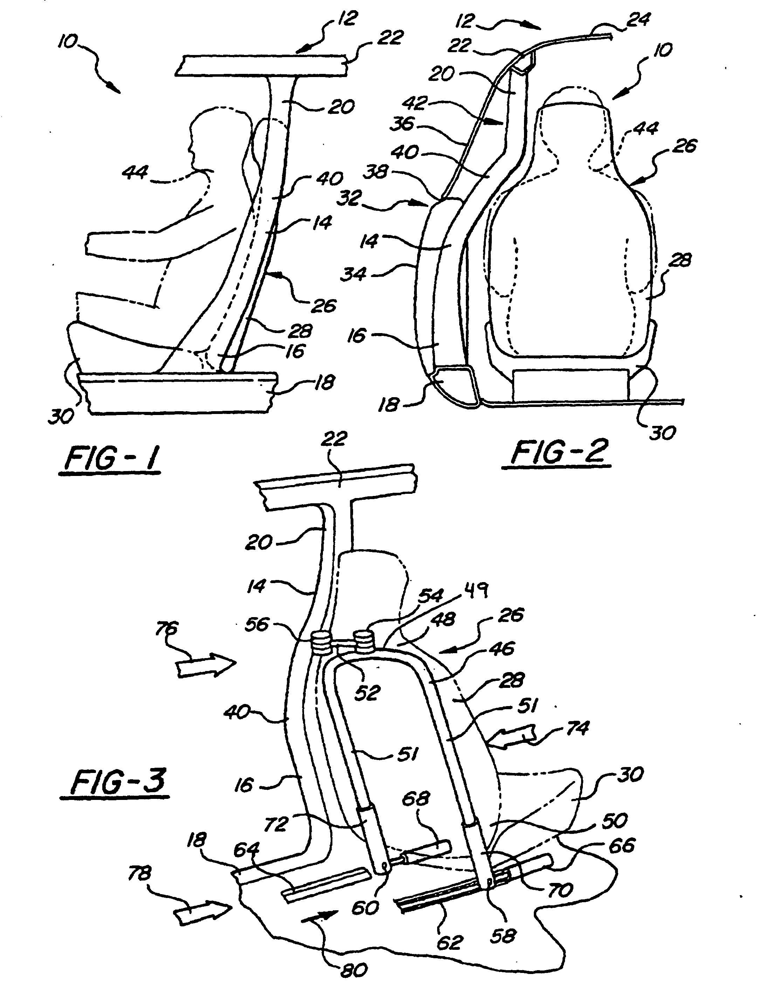

Referring now to Figures 1 and 2 there is shown a passenger or driver's compartment 10 defined by a body structure of a motor vehicle 12. The body structure includes a side or B-pillar structure 14 that extends generally between a bottom portion and top portion of the vehicle 12.

The B-pillar structure has a lower portion 16 that is preferably connected to a side member 18 that extends along the bottom portion of the vehicle 12 although it could be connected to any structure in the bottom portion of the vehicle that provides the required structural support.

The B-pillar 14 has an upper portion 20 that is attached to a cant rail 22 that is secured to the top portion or roof 24 of the vehicle although the B-pillar 14 could be connected to any structure in the top portion of the vehicle that provides the required structural support.

The passenger compartment 10 also includes a vehicle seat 26 disposed therein. The vehicle seat 26 includes a seat back 28 and a seat bottom 30. The seat 26 is positioned so as not to interfere with the B-pillar 14.

The lower portion 16 of the B-pillar 14 generally matches the profile of the lower part 34 of the vehicle door 32. The connection of the lower part 34 of the door 32 to the upper part 36, generally defines a beltline 38.

The lower portion 16 of the B-pillar 14 thus extends generally vertically between the side member 18 and the beltline 38 of the vehicle 32. The B-pillar has a middle portion 40 that is preferably connected to the lower portion 16 and curves generally inward toward the vehicle seat 26, generally adjacent to the beltline 38. The upper portion 20 of the B-pillar 14 is preferably connected to the middle portion 40 and extends generally vertically between the beltline 38 and the roof 24.

The upper portion 20 of the B-pillar 14 is set further inboard than a conventional B-pillar and creates a void 42 between the B-pillar 14 and the upper glass part 36 of the vehicle door 32. The external profile of the upper part 36 of the door and the lower part 34 of the door are not affected by the shape of the B-pillar 14. The void 42 between the B-pillar 14 and the upper glass part 36 increases the side visibility of a driver 44 by narrowing or eliminating any blind spots due to the B-pillar 14.

The configuration of the B-pillar also provides safety advantages. For example, in the event of a rear crash, the front seat back 28 moves rearwardly to cushion the force of impact on a driver 44 or other occupant and reduce the likelihood of whiplash injuries, as discussed in more detail below. Further, the shape of the B-pillar 14 does not obstruct the rearward movement of the driver 44 with respect to the vehicle, as shown in Figure 2, because the driver's profile does not overlap with that of the B-pillar 14.

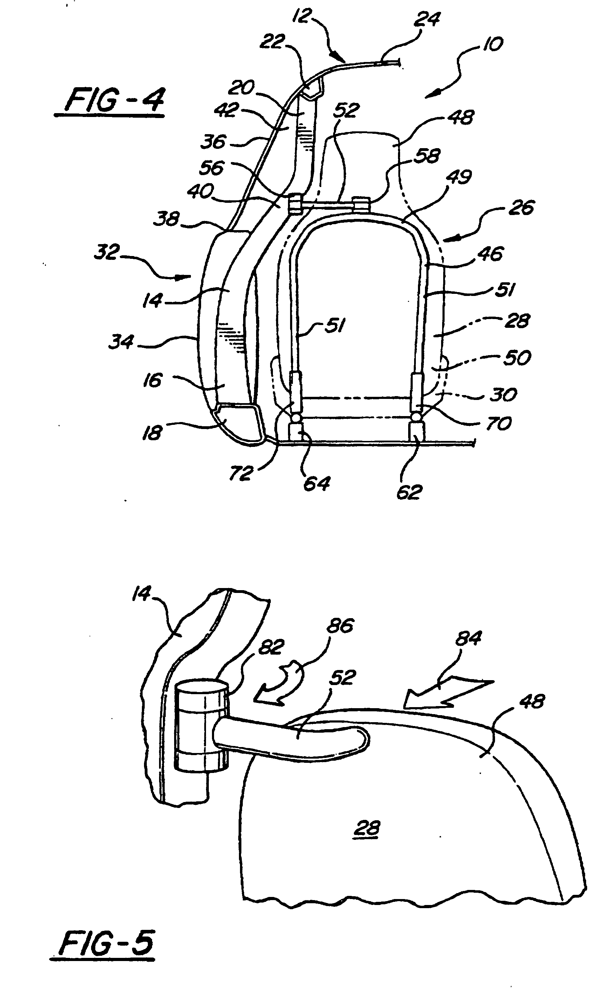

As shown in Figures 3 and 4, the vehicle seat back 28 includes a seat back structure 46 disposed therein which supports the seat back 28 at both its upper portion 48 and its lower portion 50. The seat back structure 46 is generally horseshoe shaped and includes an upper curved portion 49 and a pair of leg portions 51. The seat back structure 46 helps reduce the weight of the seat back 28 and provide greater control of the seat back translation and/or orientation during a rear impact when the seat 26 is subjected to inertial forces 74 applied by the driver 44.

The inward curving of the B-pillar 14 due to the middle portion 40 facilitates a connection between the B-pillar structure 14 and the seat back structure 48 through a support arm 52. The support arm 52 preferably has an inner end 54 and an outer end 56 which are each hinged by joints and also act as rotary energy absorbers. The outer end 56 of the support arm 52 is preferably rotatably coupled to the middle portion 40 of the B-pillar 14 and the inner end 54 of the support arm 52 is rotatably coupled to the upper curved portion 49 of the seat back structure 48. In the event of a rear crash, the inertial loads imposed by the driver 44 or other occupant pushes the upper portion 48 of the seat back 28 rearward. This inertial load causes the support arm 52 to swing backward by pivoting about its outer end 56, thereby absorbing energy. Alternatively, instead of rotary pivots, the support arm 52 can be constructed to bend and thereby absorb energy. Other energy absorption devices may also be utilized at the ends 54, 56 of the support arm 52.

The lower portion 50 of the seat back 28 is preferably attached to the seat bottom 30 by a pair of horizontal revolute supports 58, 60, which are located at the ends of the leg portions 51. The supports 58 and 60 are allowed to slide in forward and rearward directions in a respective sliding mechanism 62 and 64, which is located on either side of the seat bottom 30. The sliding mechanisms 62, 64 are in turn restrained by energy absorbers 66, 68 to prevent movement thereof. These structures allow the seat back 28 to slide rearward to absorb energy in the event of a collision.

The upper support arm 52 and the two lower energy absorbers 66, 68 are tuned to provide the required rearward motion orientation of the seat back 28 that is necessary to minimize injuries to the occupant in a rear impact. For comfort, the angle of the seat back 28 can also be adjusted by rotation about the upper support arm 52, upon activation by the driver through the use of the sliding mechanisms 62, 64. Disposed at the connection of the leg portions 51 and the sliding mechanisms 62, 64 are a pair of sliding joints 70, 72 which accommodate changes in length between the inner end 54 of the upper support arm 52 and the lower supports 58, 60 that occurs when the seat back translates and rotates rearward in a crash. The upper seat back support arm 52 swivels about the upper curved portion 49 of the seat back structure 46 via rotary compliance in the existing attachment locations of the support arm 54, 56.

The support arm 52 is connected to the seat 26 generally at the centre of the seat back 28 and also generally at the centre of the upper curved portion 49 of the seat back support structure 46. This connection prevents twisting of the seat back 28 when it is pushed backwards by inertial loads, as generally indicated by the arrow 74, in a rear crash. The seat back 28 is supported by a symmetric set of loads 76, 78, 80. This prevents a twisting of the seat back 28 which may lead to adverse effects on the motion of the occupant 44 due to twisting of the torso and sliding out of the seat.

Figure 5 illustrates an alternative connection between the B-pillar 14 and the upper portion 48 of the seat back 28. As shown, the outer end 56 of the support arm 52 is connected to the B-pillar by a spherical joint 82. The connection preferably occurs at the upper portion 20 of the B-pillar 14. The inner end 54 is preferably rotatably coupled to the seat back structure 46 as discussed above, or it may be rigidly attached to the seat back structure 46 as discussed in more detail below. However, the inclusion of the spherical joint 82 helps achieve the required rotational compliance of the seat back 28 for adjusting the seat back angle and to allow the seat back 28 to translate in a rearward direction, as generally indicated by reference number 84, in a rear crash. In a rear crash, the support arm 52 swivels in a rearward direction while pivoting at the B-pillar 14, as generally indicated by the arrow 86.

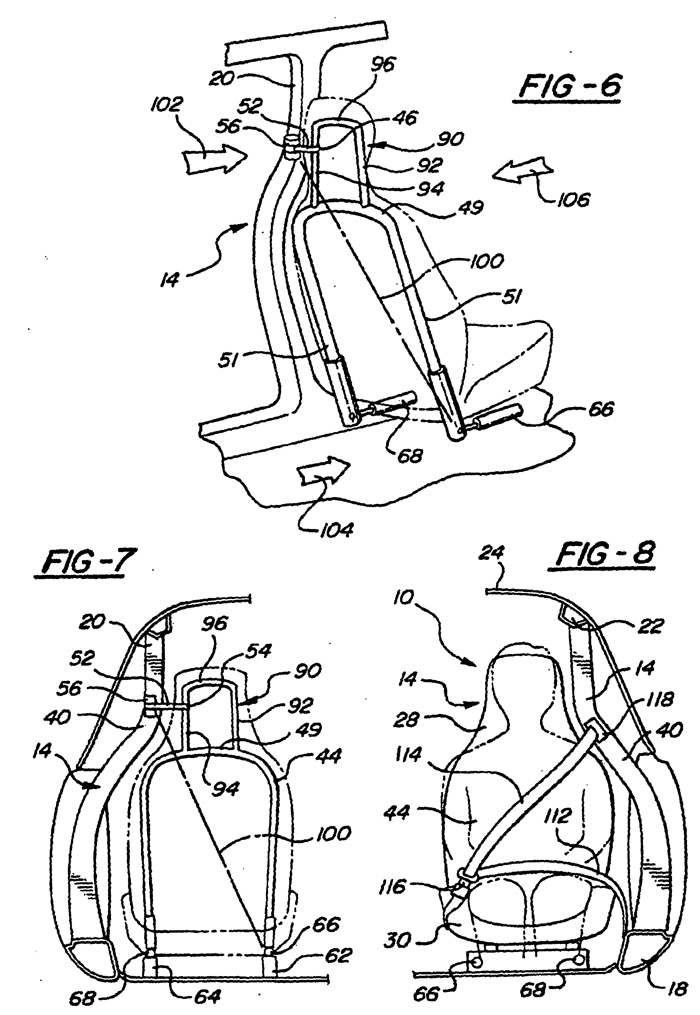

Referring now to Figures 6 and 7 which illustrate an alternative embodiment of the present invention in which the support arm 52 connects to a side of the seat back structure 46. The outer end 56 of the support arm 52 is preferably connected to the upper portion 20 of the B-pillar 14, as discussed above in connection with Figure 5. The inner end 54 of the support arm 52 is preferably rigidly secured to a headrest support structure 90. The headrest support structure 90 is attached to the seat back structure 46 and has a pair of leg portions 92, 94 that extend upwardly from the upper curved portion 49 and terminate at a headrest support curved portion 96. The inner end 54 of the support arm 52 is preferably attached to the outer leg portion 94.

In this embodiment, only the inboard energy absorber 66 is made active in a rear crash. The effective point of application of the inertial force of the occupant 44 on the seat back 28 in a rear impact is approximately aligned with a diagonal line, generally indicated by reference number 100 and shown in dashed format extending from the support arm 52 to the inboard energy absorber 66. The support arm 52 in this embodiment is preferably attached to the upper portion 20 of the B-pillar 14.

With this configuration, the seat back support forces, generally indicated by reference numbers 102, 104, are approximately co-linear with the inertial force of the seat occupant 44 generally indicated by reference number 106, thus reducing torsional loads on the seat back structure that lead to twisting.

Referring now to Figure 8, which illustrates a front view of the preferred seat 26 and belt system, the inner and outer sliding mechanisms 62, 64 support the seat bottom 30 to allow forward translation of the seat 26 in a frontal or head on crash. The inner sliding mechanism 62 is restrained by the inner energy absorber 66 while the outer sliding mechanism 64 is not retarded in the forward direction by the outer energy absorber 68. The lap and shoulder belts 112, 114 respectively apply loads on the inboard belt attachment 116 which is connected to the seat bottom 30 and decelerates the seat bottom 30 due to controlled deformation of the inner energy absorber 66. The forward travel of the vehicle seat 26 increases the ride down distance of the occupant 44 within the available forward space. The shoulder belt 114 is spooled out from the belt retractor assembly 118, which is attached to the inboard B-pillar assembly 14 and provides proper positioning of the shoulder belt 114 for drivers of different statures. Alternatively, the shoulder belt spool out location may be attached to the support arm 52. The shoulder belt 114 preferably extends from the middle portion 40 of the B-pillar 14, and transmits belt loads to the B-pillar 14.

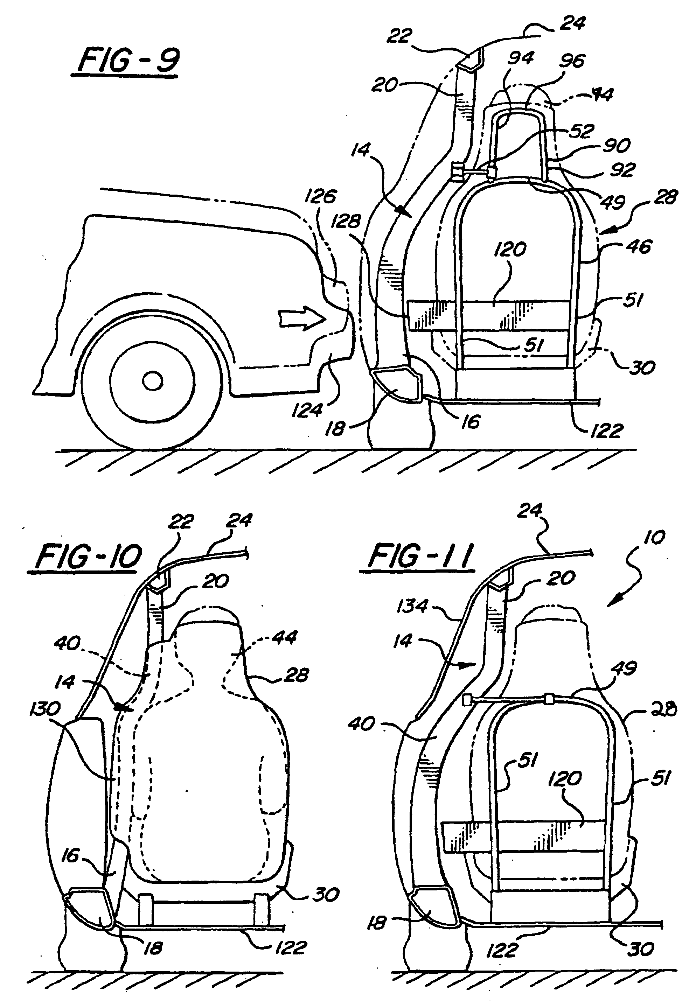

As shown in Figure 9, the connection between the B-pillar 14 and the seat back 28 requires the seat back 28 to remain in line with the B-pillar 14. Moveable pedals and an adjustable steering wheel preferably provide the required ergonomic accommodation to suit drivers of different statures while maintaining the relationship between the B-pillar 14 and the seat back 28.

The seat back structure 46 preferably includes a seat back structure extension 120, which extends outwardly towards the B-pillar 14. The side impact intrusion resistance of the vehicle is enhanced by maintaining the gap 128 between the B-pillar 14 and the extension 120 to a minimum. This helps channel side impact forces into a floor structure 122 of the vehicle via the seat back structure 46. The headrest support structure 90 and the support arm 52 also transmit side impact loads into the seat back structure 40 which reinforces the seat back. The two additional load paths for side impact forces created by the leg portions 51 supplement existing load paths through the side member 18 and the roof 24. The reinforcement extension 120 can be positioned high enough to be effective at resisting side impact forces from vehicles with both low and high bumper heights, as generally indicated by reference numbers 124 and 126 respectively.

The middle portion 40 of the B-pillar 14 reduces the visual objection for the driver posed by a B-pillar of conventional shape. Forward vision for rear passengers is also enhanced by the inwardly extending middle portion or inboard sweep 40 of B-pillar 14. Therefore, the roominess of a four-door hard top is realized while maintaining the safety of a full length B-pillar.

An alternative embodiment of the present invention is shown in Figure 10, where the seat back 28 is visually blended into the B-pillar structure 14 by moving the upper portion of the B-pillar 14 further inboard and enveloping it with a similar exterior covering material system as the seat cover. The seat back 28 thus has an outwardly extending flange portion 130 that integrates the B-pillar 14 with the seat back 28. A short but rigid spacer (not shown) is preferably added to create a more direct load path to the B-pillar 14 from the vehicle exterior either as an attachment to the B-pillar 14 itself or included in the door structure 34. The lower portion 16 of the B-pillar 14 may continue downward to the side member 18 as shown, or it may alternatively terminate within the seat structure 26. The B-pillar 14 in this embodiment provides the same structural and safety advantages as provided above.

Referring now to Figure 11, a rear view of the driver compartment is shown. The B-pillar 14 is configured such that forces on the roof structure 24 due to a rollover are transferred into the B-pillar 14 and the roof bow 134. The load passing down the B-pillar 14 continues downwardly through the B-pillar and also through the seat back structure 46 which reinforces the B-pillar 14, as discussed in detail above.

Having now fully described specific embodiments the invention, it will be apparent to one of ordinary skill in the art that modifications could be made without departing from the scope of the invention as defined in claims 1 to 10.

## Claims

1. A motor vehicle (12) having a body structure defining a passenger compartment (10), the body structure including at least one side pillar (14) having a lower portion (16) secured to a bottom portion (18) of the vehicle (12) and an upper portion (20) secured to a top portion (22, 24) of the vehicle (12) **characterised in that** there is a middle portion (40) that extends inwardly with respect to the passenger compartment (10) so that the upper portion (20) is disposed further inward than said lower portion (16), so that a void (42) between the side pillar (14) and the upper glass part (36) of the vehicle door (32) is created to increase the side visibility of the driver (44).

2. A motor vehicle as claimed in claim 1 in which the upper portion (20) extends generally vertically from said middle portion (40) to its juncture with the top portion (22, 24) of the vehicle (12).

3. A motor vehicle as claimed in claim 1 or in claim 2 in which the middle portion is a curved middle portion (40) that spans and extends generally inwardly in the region of a beltline (38) of the vehicle (12).

4. A motor vehicle as claimed in any preceding claim in which the vehicle (12) further comprises at least one seat (26) having bottom and back portions (30, 28) and including a seat back support structure extension (120) that extends toward said side pillar (14)to minimize impingement into the passenger compartment (10) in the event of a side impact.

5. A motor vehicle as claimed in claim 4 in which the seat back support structure (120) extends outwardly towards, but does not contact the side pillar (14), so that the seat back support structure (120) overlaps the side pillar (14) regardless of seat adjustment so as to remain an effective independent load path.

6. A motor vehicle as claimed in any of claims 1 to 5 in which the vehicle (12) further comprises at least one seat (26) having bottom and back portions (30, 28) wherein a support arm (52) is connected between a side pillar (14) and an adjacent seat back (28).

7. A motor vehicle as claimed in claim 6 in which the support arm (52) has a first end (56) rotatably coupled to the side pillar (14) and a second end (58) rotatably coupled to the seat back (28).

8. A motor vehicle as claimed in claim 6 or in claim 7 in which there is a structure (48) disposed in said seat back (28) that connects the seat back (28) to the seat bottom (30) wherein the structure (48) includes a pair of leg portions (51) each of which is connected to a sliding mechanism (62, 64) connecting the seat (26) to the motor vehicle (12).

9. A motor vehicle as claimed in claim 8 in which each of the sliding mechanisms (62, 64) has an energy absorber (66, 68) associated therewith.

10. A motor vehicle as claimed in any of claims 1 to 4 wherein at least a portion of the side pillar (14) is covered by a flange portion (130) of the seat back (28).

## Patentansprüche

1. Kraftfahrzeug (12) mit einer Fahrzeugaufbaustruktur, welche einen Fahrgastraum (10) bildet, wobei die Fahrzeugaufbaustruktur wenigstens einen Seitenpfosten (14) mit einem unteren Teil (16) beinhaltet, der an einem unteren Teil des Fahrzeuges (12) befestigt ist, und mit einem oberen Teil (20), der an einem oberen Teil (22, 24) des Fahrzeuges befestigt ist,
**dadurch gekennzeichnet, daß** ein Mittelabschnitt (40) vorgesehen ist, der dem Fahrgastraum (10) gegenüber so nach innen ragt, daß der obere Teil (20) weiter innen angeordnet ist als besagter unterer Teil (16), so daß zwischen dem Seitenpfosten (14) und dem oberen Glasteil (36) der Fahrzeugtür (32) ein freier Raum erzeugt wird, der die Sicht des Fahrers (44) erhöht.

2. Kraftfahrzeug nach Anspruch 1, worin der obere Teil (20) von besagtem Mittelteil (40) aus bis zu seinem Anschluß an den oberen Teil (22, 24) des Fahrzeuges (12) allgemein vertikal verläuft.

3. Kraftfahrzeug nach Anspruch 1 oder Anspruch 2, worin der Mittelteil ein gekrümmter Mittelteil (40) ist, der den Bereich einer Gürtellinie (38) des Fahrzeuges (12) überspannt und in diesem Bereich allgemein nach innen reicht.

4. Kraftfahrzeug nach einem beliebigen der vorangehenden Ansprüche, worin das Fahrzeug (12) außerdem wenigstens einen Sitz (26) mit einem unteren und einem Rückenteil (30, 28) aufweist, sowie eine Sitzrückenlehnen-Stützstruktur (120), die bis zum Seitenpfosten (14) reicht, um das Eindringen in den Fahrgastraum (10) im Falle eines Seitenaufpralles zu minimieren.

5. Kraftfahrzeug nach Anspruch 4, worin die Sitzrückenlehnen-Stützstruktur (120) nach außen zum Seitenpfosten (14) reicht, ihn jedoch nicht berührt, so daß die Sitzrückenlehnen-Stützstruktur (120) den Seitenpfosten überlappt, unabhängig von der Sitzverstellung, so daß sie ein unabhängiger effektiver Lasteinleitungsweg bleibt.

6. Kraftfahrzeug nach einem beliebigen der Ansprüche 1 bis 5, worin das Fahrzeug (12) außerdem wenigstens einen Sitz (26) mit einem unteren und einem Rückenteil (30, 28) aufweist, worin ein Stützarm (52) zwischen einem Seitenpfosten (14) und einer benachbarten Sitzrückenlehne (28) eingebaut ist.

7. Kraftfahrzeug nach Anspruch 6, worin der Stützarm (52) ein erstes Ende (56) aufweist, das drehbar mit dem Seitenpfosten (14) verbunden ist, und ein zweites Ende (58), das drehbar mit der Sitzrückenlehne (28) verbunden ist.

8. Kraftfahrzeug nach Anspruch 6 oder Anspruch 7, worin eine Struktur (48) in besagter Sitzrückenlehne (28) angeordnet ist, welche die Sitzrückenlehne (28) mit dem Sitzunterteil (30) verbindet, worin die Struktur (48) zwei Schenkelteile (51) aufweist, wovon jedes mit einem Gleitmechanismus (62, 64) verbunden ist, über welchen der Sitz (26) mit dem Kraftfahrzeug (12) verbunden ist.

9. Kraftfahrzeug nach Anspruch 8, worin jeder der Gleitmechanismen (62, 64) eine ihm zugeordnete Energietilgungseinrichtung (66, 68) beinhaltet.

10. Kraftfahrzeug nach einem beliebigen der Ansprüche 1 bis 4, worin wenigstens ein Teil des Seitenpfostens (14) von einem Flanschteil (130) des Sitzrückens (28) abgedeckt wird.

## Revendications

1. Véhicule à moteur (12) doté d'une structure de carrosserie définissant un compartiment passagers (10), la structure de carrosserie comprenant au moins un montant latéral (14) dont la partie inférieure (16) est fixée à une partie du fond (18) du véhicule (12) et la partie supérieure (20) est fixée à une partie du toit (22, 24) du véhicule (12), **caractérisé en ce qu'**il y a une partie centrale (40) qui est orientée vers l'intérieur du compartiment passagers (10) de telle sorte que la partie supérieure (20) se trouve plus à l'intérieur que ladite partie inférieure (16), ce qui crée un vide (42) entre le montant latéral (14) et la partie supérieure (36) de la vitre de la porte du véhicule (32) pour augmenter la visibilité latérale du conducteur (44).

2. Véhicule à moteur selon la revendication 1 dans lequel la partie supérieure (20) occupe une position sensiblement verticale entre ladite partie centrale (40) et sa jonction avec la partie du toit (22, 24) du véhicule (12).

3. Véhicule à moteur selon la revendication 1 ou 2 dans lequel la partie centrale est une partie centrale (40) incurvée qui est sensiblement orientée vers l'intérieur dans la région de la ceinture de caisse (38) du véhicule (12).

4. Véhicule à moteur selon l'une des revendications précédentes dans lequel le véhicule (12) comprend en outre au moins un siège (26) doté d'une partie assise et d'une partie dossier (30, 28) et comprenant une extension de la structure support du dossier (120) qui est orientée vers ledit montant latéral (14) pour minimiser l'impact dans le compartiment passagers (10) en cas de choc latéral.

5. Véhicule à moteur selon la revendication 4 dans lequel la structure support du dossier (120) est orientée vers l'extérieur en direction du montant latéral (14), sans toucher celui-ci, de telle sorte que la structure support du dossier (120) chevauche le montant latéral (14) quel que soit le réglage du siège de façon à constituer un chemin de chargement indépendant et efficace.

6. Véhicule à moteur selon l'une des revendications 1 à 5 dans lequel le véhicule (12) comprend en outre au moins un siège (26) doté d'une partie assise et d'une partie dossier (30, 28) dans lequel un bras support (52) assure une liaison entre un montant latéral (14) et un dossier (28) adjacent.

7. Véhicule à moteur selon la revendication 6 dans lequel le bras support (52) est muni d'une première extrémité (56) reliée au montant latéral (14) de façon à pouvoir pivoter et une deuxième extrémité (58) reliée au dossier (28) de façon à pouvoir pivoter.

8. Véhicule à moteur selon la revendication 6 ou 7 dans lequel existe une structure (48) disposée dans ledit dossier (28) qui relie le dossier (28) à l'assise du siège (30), dans lequel la structure (48) comprend une paire de jambes (51) dont chacune est reliée à un mécanisme de glissière (62, 64) qui relie le siège (26) au véhicule à moteur (12).

9. Véhicule à moteur selon la revendication 8 dans lequel chaque mécanisme de glissière (62, 64) est équipé d'un absorbeur d'énergie (66, 68).

10. Véhicule à moteur selon l'une des revendications 1 à 4 dans lequel une partie au moins du montant latéral (14) est couverte par une partie du dossier (28) formant une surface d'appui (130).
